(19) Europäisches Patentamt
European Patent Office
Office européen des brevets

(11) **EP 1 348 295 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(21) Anmeldenummer: **01985798.6**

(22) Anmeldetag: **20.12.2001**

(51) Int Cl.⁷: **H04M 15/00**, H04M 15/28

(86) Internationale Anmeldenummer:
**PCT/DE2001/004870**

(87) Internationale Veröffentlichungsnummer:
**WO 2002/054753 (11.07.2002 Gazette 2002/28)**

(54) **VERFAHREN UND TELEKOMMUNIKATIONSSYSTEM ZUR LAUFENDEN BERECHNUNG VON GEBÜHREN**

METHOD AND TELECOMMUNICATION SYSTEM FOR CURRENT CALCULATION OF FEES

PROCEDE ET SYSTEME DE TELECOMMUNICATION DE TAXATION COURANTE

(84) Benannte Vertragsstaaten:
**DE ES FR GB IT**

(30) Priorität: **03.01.2001 DE 10100150**

(43) Veröffentlichungstag der Anmeldung:
**01.10.2003 Patentblatt 2003/40**

(73) Patentinhaber: **SIEMENS AKTIENGESELLSCHAFT 80333 München (DE)**

(72) Erfinder:
• **BRICELJ, Andreas 14612 Berlin (DE)**
• **DE CLERCQ, Pascal B-9120 Drongen (BE)**

(56) Entgegenhaltungen:
**EP-A- 0 526 118        EP-A- 0 647 055
EP-A- 0 734 144        EP-A- 0 974 238
WO-A-01/30061          DE-A- 19 706 779**

**Beschreibung**

Die Erfindung betrifft ein Verfahren gemäß dem Oberbegriff des Patentanspruchs 1 zur laufenden Gebührenberechnung in einem Telekommunikationssystem mit einer Gebührenberechnungssstelle, welche dazu eingerichtet ist, Informationen über eine aktuelle Tarifrate zu empfangen und anhand der Tarifrate und der Benutzungsdauer eines Dienstes anfallende Gebühren zu berechnen, wobei die Abrechnungsgenauigkeit der Gebühren von einer von Seiten eines tarifierenden Dienstbetreibers vorgebbaren Taktung des der Gebührenbrechnung zugrunde liegenden Zeitintervalls bestimmt wird und die Gebührenberechnungsstelle weiters dazu eingerichtet ist, in vorgebbaren Zeitintervallen Informationen über die angefallenen Gebühren an einen Teilnehmer zu übermitteln.

Ebenso betrifft die Erfindung ein Telekommunikationssystem gemäß dem Oberbegriff des Patentanspruchs 7 mit einer Gebührenberechnungsstelle, welche dazu eingerichtet ist, bei Inanspruchnahme eines Dienstes anfallende Gebühren anhand einer dem Dienst zugeordneten Tarifrate und der Benutzungsdauer des Dienstes zu berechnen, wobei die Abrechnungsgenauigkeit der Gebühren von einer von Seiten eines tarifierenden Netz/Dienstbetreibers vorgebbaren Taktung des der Gebührenbrechnung zugrunde liegenden Zeitintervalls bestimmt ist und die Gebührenberechnungsstelle weiters dazu eingerichtet ist, in vorgebbaren Zeitintervallen Informationen über die angefallenen Gebühren an ein Telekommunikationsengerät eines Teilnehmers zu übermitteln.

Unter Diensten werden in diesem Dokument das zur Verfügung stellen der Fähigkeiten und Leistungsmerkmale eines Telekommunikationssystems verstanden, beispielsweise die Sprach- oder Datenübertragung, sowie Vermittlunstätigkeiten, aber auch die Bereitstellung eines Netzes etc.

Mit der Einführung der Übertragung von Entgeltinformationen für Endkunden bei Inanspruchnahme von Diensten, beispielsweise einem Sprachdienst, werden die der Vergebührung zugrundeliegenden Tarife, welche die Form Preis pro Zeiteinheit haben, von einem den Dienst tarifierenden Dienstbetreiber an einen Teilnehmernetzbetreiber übermittelt, der entsprechend seiner Abrechnungsgenauigkeit Gebühren berechnet, die seinen Endkunden/Teilnehmern in Form von Entgeltinformationen zur Verfügung gestellt werden.

Die beispielsweise durch internationale - ETSI ES 201 296 - und nationale Standards bestimmte Tarifinformation, wird hierbei ebenfalls in der Form Preis pro Zeiteinheit - üblicherweise als Preis pro Sekunde angegeben.

Die Ausgabe der Gebühren auf einem Telekommunikationsendgerät eines Teilnehmers kann gemäß dem Stand der Technik abhängig von der Einrichtung und den Möglichkeiten des Endgerätes entweder im Währungsformat oder in Gebührenimpulsen erfolgen. Dabei werden die anfallenden Gebühren als Produkt der vergangenen Zeit, beispielsweise in Sekunden, mit der Tarifrate, beispielsweise Preis pro Sekunde, bestimmt.

Das Dokument EP-A-0734144 offenbart ein Verfahren zum Ermitteln der Benutzergebühr in einer Teilnehmereinrichtung, wobei die Benutzergebühr wird aus in der Teilnehmereinrichtung eingespeicherten Tarifdaten und von einer Zentralstelle übertragenen Gebührendaten (z.B. Gebührenintervalle, Einheiten pro Intervall und Umrechnungsfaktoren) ermittelt.

Die Abrechnung des tarifierenden Dienstbetreibers kann mit der Anzeige der Gebühren auf dem Telekommunikationsendgerätes nur dann übereinstimmen, wenn die Abrechnungsgenauigkeit des Teilnehmernetzbetreibers und des tarifierenden Dienstbetreibers die gleiche ist.

Rechnet beispielsweise der tarifierende Dienstbetreiber mit einer Genauigkeit von 60 Sekunden ab und der Teilnehmernetzbetreiber mit einer Sekunde, so stimmt die Gebührenanzeige auf dem Telekommunikationsendgerät des Teilnehmers nicht mit den ihm tatsächlich entstehenden Kosten überein. Anhand eines Beispiels soll dies im folgenden verdeutlicht werden.

Der Tarif für einen Dienst betrage 0.005 €/sek, die Abrechnungsgenauigkeit des Teilnehmernetzbnetreibers eine Sekunde und die Abrechnungsgenauigkeit des Vermittlungsnetzbetreibers 60 Sekunden. Bei einem Ruf der Dauer 20 Sekunden wird am Telekommunikationsendgerät des Teilnehmers als Gesprächsgebühr 0,1 €, angezeigt, der tarifierende Netzbetreiber ermittelt im "Postprocessing" jedoch 0,3 €, und stellt diese in Rechnung, da das seiner Abrechnungsgenauigkeit zugrunde liegende Zeitintervall dreimal so lang ist, wie das des Teilnehmernetzbetreibers.

Aus dem oben Gesagten folgt, dass der Teilnehmer dreimal mehr zahlen muss, als ihm angezeigt wurde. Verständlicherweise kann dieser Sachverhalt zu Unzufriedenheiten auf Teilnehmerseite führen.

Es liegt daher im Interesse sowohl der Teilnehmer als auch der Netzbetreiber, die tatsächlich anfallenden Kosten auf dem Telekommunikationsendgerät des Teilnehmers auszugeben.

Unter "Postprocessing" wird hierbei verstanden, dass die Berechnung der Gebühren nach Beendigung der Inanspruchnahme des Dienstes erfolgt. Die Gebühren sollten jedoch "online" also weitestgehend synchron mit der Benutzung des Dienstes auf dem Telekommunikationsendgerät des Teilnehmers dargestellt werden.

Der einzig bekannte Weg, um Gebührenanzeige und Rechnung in Übereinstimmung zu bringen, besteht darin die Abrechnungsgenauigkeit der einen Dienst zur Verfügung stellenden und tarifierenden Netzbetreiber mit der Abrechnungsgenauigkeit der Teilnehmernetzbetreiber in Übereinstimmung zu bringen. Dies führt jedoch zu einer starken Einschränkung der Vergebührungsmöglichkeiten der Telekommunikationsdienste zur Verfügung stellenden Netzbetreiber.

Die berechneten Gebühreninformationen sind auch hinsichtlich der Kostenüberwachung für Dienste von Bedeutung, bei denen die Überschreitung eines gewissen Kostenrahmens bei Benutzung des Dienstes automatisch verhindert werden soll.

Bei unterschiedlichen Abrechnungsgenauigkeiten zwischen den Teilnehmernetzbetreibern und den Dienstanbietern ist keine Möglichkeit bekannt, eine exakte Einhaltung dieses Kostenrahmens zu gewährleisten.

Es ist daher eine Aufgabe der Erfindung, einen Weg zu schaffen, der es ermöglicht, laufend die tatsächlichen bei Inanspruchnahme eines Telekommunikationsdienstes anfallenden Gebühren zu berechnen.

Diese Aufgabe wird mit einem Verfahren der eingangs genannten Art erfindungsgemäß dadurch gelöst, dass Informationen über die Taktung des tarifierenden Netz/Dienstbetreibers an die Gebührenberechnungsstelle übermittelt und zur Berechnung der anfallenden Gebühren das Produkt der Tarifrate pro Zeiteinheit und der Taktung gebildet und dieses Produkt in Abhängigkeit von der Benutzungsdauer über eine vorgebbare Anzahl (n) von Taktungen summiert wird.

Diese Lösung gestattet es, Unterschiede in der Abrechnungsgenauigkeit, beispielsweise zwischen einem Teilnehmernetzbetreiber und einem tarifierenden Dienstbetreiber, zu berücksichtigen und den Teilnehmer über die tatsächlich angefallenen Gebühren laufend zu informieren.

Vorteilhafte Weiterbildungen der Erfindung sind in den abhängigen Ansprüchen angegeben.

Um den Teilnehmer den aktuellen Kostenstand zur Kenntnis zu bringen, können die Informationen über die anfallenden Gebühren auf einer Gebührenanzeige eines Telekommunikationsendgerätes des Teilnehmers angezeigt werden.

In einer vorteilhaften Variante der Erfindung wird in einer Datenbank ein zumindest einem Teilnehmer und/oder zumindest einem Dienst zugeordneter, vorgebbarer Wert für die Taktung abgelegt.

Eine große Flexibilität in der Vergebührung lässt sich dadurch erreichen, dass die Taktung in Abhängigkeit von der Art des benutzten Telekommunikationsdienstes erfolgt.

Eine Variante der Erfindung von großer praktischer Bedeutung sieht vor, dass das Telekommunikationssystem zumindest zwei Netze aufweist, und bei Benutzung eines netzüberschreitenden Dienstes durch den Teilnehmer die Festlegung der Taktung von Seiten eines Netzübergangsstellenbetreibers erfolgt, wobei Informationen über die Taktung von dem Netzübergangsstellenbetreiber an die Gebührenberechnungsstelle übermittelt werden.

In einer anderen Variante der Erfindung ist eine in Abhängigkeit von dem Teilnehmer und/oder dem Dienst von einer Dienststeuerzentrale die Taktung gesteuert wird und Informationen über die Taktung an die Gebührenberechnungsstelle übermittelt werden.

Zur Realisierung des erfindungsgemäßen Verfahrens eignet sich insbesondere ein eingangs erwähntes Telekommunikationssystem gemäß dem Patentanspruch 7, welches dazu eingerichtet ist, Informationen über die Taktung an die Gebührenberechnungsstelle zu übermitteln und zur Berechnung der anfallenden Gebühren das Produkt der Tarifrate und der Taktung zu bilden und dieses Produkt in Abhängigkeit von der Benutzungsdauer über eine vorgebbare Anzahl von Taktungen zu summieren.

Vorteilhafte Ausgestaltungen der Erfindung sind in den Unteransprüchen angegeben.

Vorteilhafterweise ist das Telekommunikationssystem dazu eingerichtet, die Informationen über die anfallenden Gebühren auf einer Gebührenanzeige eines Telekommunikationsendgerätes des Teilnehmers anzuzeigen.

In einer günstigen Variante der Erfindung ist zumindest eine Datenbank vorgesehen, in der ein zumindest einem Teilnehmer und/oder zumindest einem Dienst zugeordneter, vorgebbarer Wert für die Taktung abgelegt ist.

Um einen großen Spielraum bei der Vergebührung zu haben, ist es von Vorteil, wenn die Taktung von der Art des benutzten Dienstes abhängt.

Eine Variante der Erfindung von hoher praktischer Bedeutung besteht darin, dass zumindest zwei Teilnehmernetze vorgesehen sind, die mittels einer Netzübergangsstelle miteinander verbunden sind, wobei bei Benutzung eines netzüberschreitenden Telekommunikationsdienstes durch den Teilnehmer die Festlegung der Taktung von Seiten der Netzübergangsstelle erfolgt, und Informationen über die Taktung von der Netzübergangsstelle an die Gebührenberechnungsstelle übermittelt werden.

Eine andere Variante der Erfindung sieht eine Dienststeuerzentrale vor, die dazu eingerichtet ist, in Abhängigkeit von dem Teilnehmer und/oder dem Telekommunikationsdienst die Taktung zu steuern und Informationen über die Taktung an die Gebührenberechnungsstelle zu übermitteln.

Die Erfindung samt weiterer Vorteile ist im folgenden anhand einiger nicht einschränkender Ausführungsbeispiele, die in der Zeichnung veranschaulicht sind dargestellt, in dieser zeigen schematisch:

Fig. 1 eine erste Variante eines erfindungsgemäßen Telekommunikationssystems und

Fig. 2 eine graphische Darstellung der berechneten Gebühren, wobei auf der x-Achse die Zeit und auf der y-Achse die aktuelle Tarifrate aufgetragen ist

Fig. 3 eine zweite Variante eines erfindungsgemäßen Telekommunikationssystems.

Fig. 4 eine Datenbank einer Dienststeuerzentrale und

Fig. 5 eine Datenbank einer Gebührenberechnungsstelle.

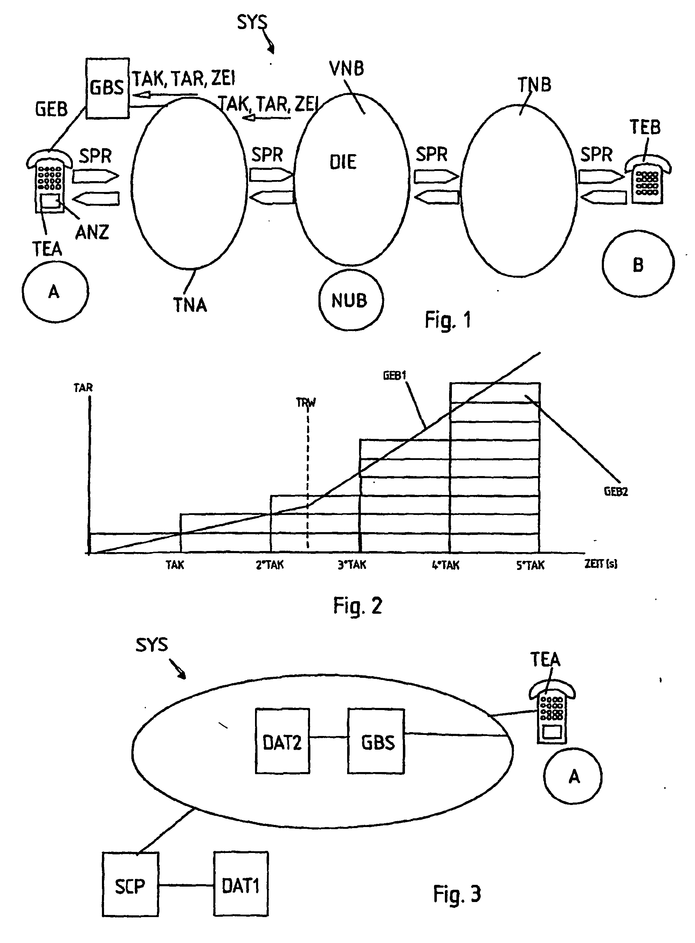

Gemäß Fig. 1 weist eine erste Variante eines erfindungsgemäßen Telekommunikationssystem SYS ein erstes Teilnehmernetz TNA, ein zweites Teilnehmernetz TNB und ein die beiden Netze verbindendes Verbindungsnetz VBN auf welches die Funktion einer Netzübergangsstelle NUB zwischen den beiden Netzen hat.

Weiters weist das Telekommunikationssystem SYS mindestens ein Telekommunikationsendgerät TEA auf, welches dazu eingerichtet ist, bei Benutzung eines Dienstes DIE, beispielsweise eines Vermittlungsdienstes, die dabei anfallenden Gebühren GEB auf einer eigens dafür vorgesehenen Anzeige ANZ auszugeben.

In dem vorliegenden Beispiel ruft ein dem ersten Teilnehmernetz TNA zugeordneter Teilnehmer A von seinem Telekommunikationsendgerät TEA, beispielsweise ein ISDN-Endgerät, einen zweiten dem zweiten Telekommunikationsnetz TNB zugeordneten Teilnehmer B auf seinem Telekommunikationsendgerät TEB, beispielsweise ebenfalls ein ISDN-Endgerät, unter Inanspruchnahme eines dem Verbindungsnetz VBN zuzgeordneten Vermittlungs/Verbindungsdienstes DIE an. Um die während eines Austausches von Sprachnachrichten SPR zwischen den beiden Teilnehmern A, B anfallenden Gebühren GEB anzuzeigen, verfügt das Telekommunikationsendgerät TEA des ersten Teilnehmers A über eine Anzeige ANZ.

Die anfallenden Gebühren GEB werden von dem tarifierenden Dienstbetreiber, hier dem Verbindungsnetzbetreiber, bestimmt und sind von dem Teilnehmer A als Anrufenden zu entrichten. Der Betreiber des Verbindungsnetzes VBN übermittelt auf die weiter unten beschriebene Art dem Betreiber des ersten Teilnehmernetzes TNA Informationen über die Benutzungsdauer des Dienstes DIE und seiner Abrechnungsgenauigkeit.

Die Berechnung dieser Gebühren erfolgt sodann in einer Gebührenberechnungsstelle GBS des ersten Teilnehmernetzes TNA.

Unter Abrechnungsgenauigkeit wird in diesem Dokument das für die Gebührenerhebung relevante, kleinste Zeitintervall verstanden. Dieses Zeitintervall entspricht einer Taktung TAK der Benutzungsdauer des Dienstes DIE. Üblicherweise beträgt die Abrechnungsgenauigkeit bzw. die Taktung TAK 1, 10 oder 60 Sekunden, natürlich sind auch beliebige andere Zeitintervalle denkbar.

Wie bereits eingangs beschrieben können unterschiedliche Abrechnungsgenauigkeiten bzw. Taktungen TAK der Netzbetreiber dazu führen, dass die auf dem Telekommunikationsendgerät TEA dargestellten Gebühreninformationen nicht mit den tatsächlich von dem Teilnehmer A zu entrichtenden Gebühren GEB übereinstimmen.

Um unterschiedliche Abrechnungsgenauigkeiten verschiedener Netzbetreiber zu berücksichtigen, erfolgt die Berechnung der laufenden Gebühren, die zur Information des Teilnehmers A dienen unter Berücksichtigung der von dem tarifierenden Netzbetreiber vorgegebenen Taktung TAK.

In dem vorliegenden Fall wird von dem Betreiber des Verbindungsnetzes VBN die Taktung TAK als Zusatzinformation zu den üblichen Informationen, wie der Tarifrate TAR und der Benutzungsdauer ZEI des Dienstes DIE, an die Gebührenberechnungsstelle GBS des ersten Teilnehmernetzes TNA übermittelt.

Die Übertragung der Taktung TAK kann beipielsweise gemäss dem Standard ITU-T Q.763 erfolgen, die Taktung TAK wird hierbei als zusätzlicher Parameter definiert und übertragen.

Der Parameter "Taktung" kann als Erweiterung des nationalen ISUP-Standards definiert und der Code für den Parameter festgelegt werden.

Damit Teilnehmernetzbetreiber TNA, die den Parameter noch nicht interpretieren können, diesen verwerfen, muss die zugehörige Parameter Compatibility Information mit "do not release call" und "do not send notification" aufgesetzt werden.

Der neu definierte Parameter "Taktung" kann in einer bestehenden ISUP Nachricht während des Rufaufbaus an die Gebührenberechnungsstelle GBS übertragen werden. Hierfür kommen folgende Meldungen in Frage:

- Address Complete

- Answer

- Connect

- Call Progress

Eine Einschränkung z.B. auf die Answer und Connect Message vereinfacht das Ganze etwas, da im Laufe eines Rufaufbaus nur eine Answer bzw. Connect gesendet/empfangen wird (man vermeidet somit das Problem zu erklären, was passieren soll, wenn die Taktung mehrfach empfangen wird - hier müßte man dann z.B. definieren: "die zuletzt empfangene Taktung vor Answer gilt").

Eine andere Möglichkeit, die Taktung zu übertragen, besteht darin, die Taktung als Extension gemäß der ASN.1 Struktur der Charging Tariff Information entsprechend dem Standard ETS 201 296 anzugeben. Bei der soeben erwähnten ASN.1 Struktur ist ein Extension Feld vorgesehen, welches so definiert ist, dass projektspezifische Erweiterungen möglich sind. Eine Möglichkeit die Taktung zu übertragen besteht darin, das Extension Feld um die Werte für die Taktung TAK zu erweitern und mit der Information über den Tarif TAR an die Gebührenberechnungsstelle GBS zu übertragen.

Alternativ zu der Übertragung der Taktung TAK über die Extension der Tarifdefinition kann auch ein neuer, nationaler Parameter für die Taktung TAK definiert werden.

Die folgenden Werte können beispielsweise für die Taktung TAK vorgesehen sein: Taktung = 1 .. 60, wobei die Einheit eine Sekunde ist.

Für die Berechnung der Gebühren GEB in der Gebührenberechnungsstelle GBS zu einem Zeitpunkt T bei einer Tarifrate TAR des in Anspruch genommenen Dienstes DIE und einer Taktung TAK wird unter der Voraussetzung, dass die Gebührenberechnung zum Zeitpunkt T=0 der Rufannahme beginnt, das für Gebührenberechnung relevante Zeitintervall der Benutzungsdauer [0...T] in Teilintervalle

$$[t_i ... t_{i+1}] \, , \, i=0,...,n$$

mit der Eigenschaft

$$t_0 = 0,$$

$$t_{i+1} = t_i + TAK \text{ für i=0, ... , n}$$

zerlegt.

Soll die Gebühr am Anfang eines Teilintervalles fällig werden so wird der Wert von n so gewählt dass folgende Beziehung gilt:

$$t_n \leq T < t_{n+1}.$$

Wenn die Vorauszahlung nur für das erste Teilinterval gewünscht ist, so wählt man den Wert von n für T=0 so, dass n=0 gilt.

Für $T \neq 0$ wählt man n so, dass $t_n < T \leq t_{n+1}$ gilt.

Die auf dem Telekommunikationsendgerät TEA ausgegebene Entgeltanzeige GEB ergibt sich dann zu:

$$GEB = \sum_{i=0}^{n} (t_{i+1} - t_i) * TAR(t_i) \, ,$$

in der $(t_{i+1} - t_i)$ das der Abrechnung zugrundeliegende, kleinste Zeitintervall, $TAR(t_i)$ eine zeitabhängige Tarifrate und n die Anzahl der Taktungen TAK, über die summiert wird bedeuten.

Wobei hier nicht zeitabhängige Gebührenanteile, wie z. B. Vermittlungsgebühren, nicht explizit berücksichtigt sind, da sie in dem vorliegenden Beispiel keine Rolle spielen. Nicht zeitabhängige Gebührenanteile können gegebenenfalls additiv in die Gebührenberechnung eingehen.

Neben der Entgeltanzeige der tatsächlich angefallenen Gebühren GEB (s. oben), kann die Taktung auch bei der Ausgabe der voraussichtlich zu erwartenden Gebühren zu Beginn eines Gespräches, z. B. ETSI Supplementary Service AOC-S o. ä. verwendet werden. Hierbei kann dem Teilnehmer dann der Preis in der Form TAR*TAK pro Abrechnungseinheit (TAK) ausgegeben werden. Auf dem Endgerät könnte dies dann beispielsweise bei einer Tarifrate TAR00,01 €/s und einer Taktung=60s wie folgt aussehen: "0,6 €/ 60s".

Gemäß Fig. 2 wird bei Berücksichtigung der Taktung schon zu Beginn des aktuellen Intervalls der Preis für dieses Intervall berechnet und angezeigt eine Gebührenänderung z.B. durch einen Tarifwechsel TRW wird erst mit dem nächsten Intervall aktiv.

In dem Diagramm ist die als Information an den Teilnehmer weitergeleitete Gebühr GEB für zwei unterschiedliche Taktungen berechnet und dargestellt. Die erste Gebühr GEB1 berechnet sich aus einer zeitabhängigen Tarifrate TAR und einer Taktung TAK von einer Sekunde, während die zweite Gebühr GEB2 mit derselben Tarifrate TAR und einer Taktung TAK von einer Minute berechnet ist.

Es ist sinnvoll allgemein als Zeitintervall, auf welches die Tarifrate TAR bezogen ist, eine Sekunde zu wählen, obwohl auch eine Tarifrate TAR auf Basis der Taktung möglich ist. Allerdings wird bei Bestimmung der Tarifrate TAR auf Sekundenbasis sichergestellt ist, dass für Teilnehmer TEI mit verschiedenen Abrechnungsmodellen auf die selbe Tarifdatenbasis zurückgegriffen werden kann.

Nach Fig. 3 kann ein erfindungsgemäßen Telekommunikationssystems SYS eine Dienststeuerzentrale SCP aufweisen, die in Abhängigkeit von einem vorgebbaren Dienst die Taktung TAK an die Gebührenermittlungsstelle GBS übermittelt.

Zu diesem Zweck kann die Dienststeuerzentrale SCP auf eine Datenbank DAT1 zugreifen, in der vorgebbaren Teilnehmern A, B zugeordnete Taktungen TAK gespeichert sind. Das Beschreiben der Datenbank kann ebenfalls von der Dienststeuerzentrale SCP vorgenommen werden.

Weiters kann auch eine Datenbank DAT2 direkt der Gebührenberechnungsstelle GBS zugeordnet sein, in der die Profile der Teilnehmer lokal abgelegt sind.

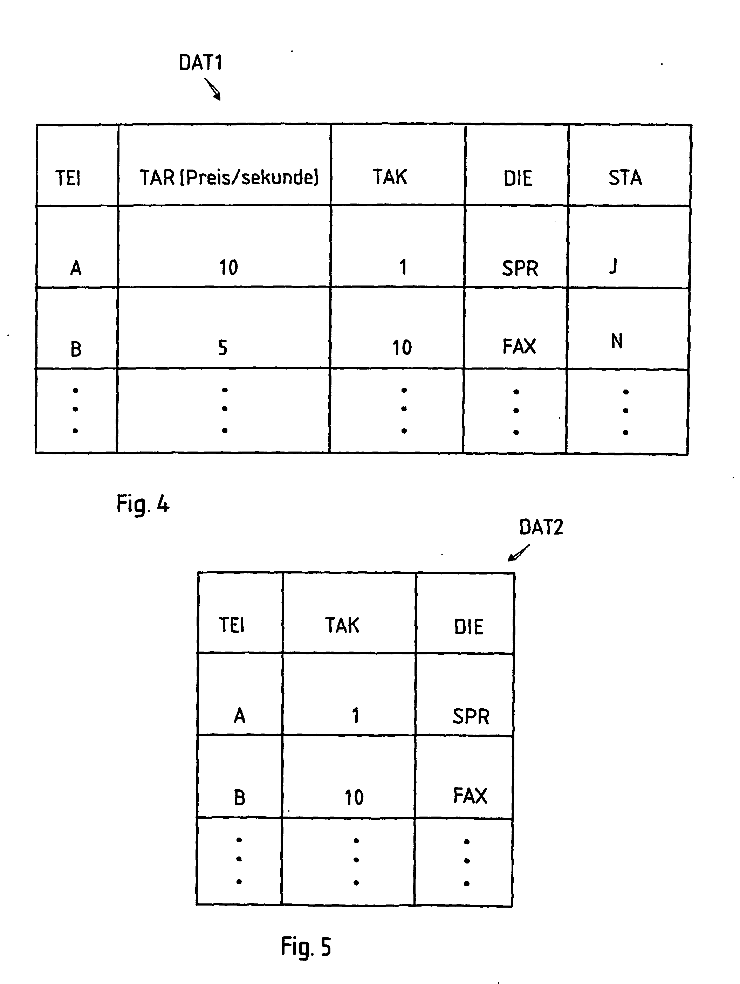

In der der Diensteuerzentrale SCP zugeordneten Datenbank DAT1 kann, wie in Fig.4 dargestellt, dem Teilnehmer TEI, A, B ein bestimmter Tarif TAR sowie ein Wert für die Taktung TAK für einen vorgebbaren Telekommunikationsdienst DIE, beispielsweise zur Sprachübertragung SPR oder ein Telefaxdienst FAX, zugewiesen sein. Weiters können Informationen über den Status STA, J, N eines Teilnehmers TEI, A, B eingetragen sein, beispielsweise ob er einen bestimmten Dienst DIE, SPR, FAX in Anspruch nehmen darf oder nicht. Ein Teilnehmer TEI, A, B kann sich beispielsweise entscheiden eine höhere Grundgebühr zu bezahlen, und sich seine Gebühren mit einer höheren Abrechnungsgenauigkeit bestimmen zu lassen. Ein derartiger Antrag kann dann beispielsweise an den Betreiber der Dienststeuerzentrale SCP gestellt werden.

Gemäß Fig. 5 kann eine Datenbank DAT2, die der Gebührenberechnungsstelle GBS direkt zugeordnet ist, für die Teilnehmer TEI, A, B eine vorgebbare Taktung TAK für vorgebbare Dienste DIE, SPR, FAX aufweisen. Anstelle einer direkten Zuweisung von Tarifraten TAR zu den Diensten DIE, SPR, FAX, wie es bei der Datenbank DAT1 für die Dienststeuerzentrale SCP vorgesehen sein kann, wird jedoch eine zielabhängige Tarifrate bevorzugt.

## Patentansprüche

1.  Verfahren zur laufenden Gebührenberechnung in einem Telekommunikationssystem (SYS) mit einer Gebührenberechnungssstelle (GBS), welche dazu eingerichtet ist, Informationen über eine aktuelle Tarifrate (TAR) zu empfangen und anhand der Tarifrate (TAR) und der Benutzungsdauer eines Dienstes (DIE, SPR, FAX) anfallende Gebühren (GEB) zu berechnen, wobei die Abrechnungsgenauigkeit der Gebühren (GEB) von einer von Seiten eines tarifierenden Dienstbetreibers vorgebbaren Taktung (TAK) des der Gebührenbrechnung zugrunde liegenden Zeitintervalls bestimmt wird und die Gebührenberechnungsstelle (GBS) weiters dazu eingerichtet ist, in vorgebbaren Zeitintervallen Informationen über die angefallenen Gebühren (GEB) an einen Teilnehmer zu übermitteln, **dadurch gekennzeichnet, dass** Informationen über die Taktung (TAK) des tarifierenden Netz/Dienstbetreibers an die Gebührenberechnungsstelle (GBS) übermittelt werden und zur Berechnung der anfallenden Gebühren (GEB) das Produkt der Tarifrate (TAR) pro Zeiteinheit und der Taktung (TAK) gebildet wird und dieses Produkt in Abhängigkeit von der Benutzungsdauer über eine vorgebbare Anzahl von Taktungen (TAK) summiert wird.

2.  Verfahren nach Anspruch 1,
    **dadurch gekennzeichnet, dass** die Informationen über die anfallenden Gebühren auf einer Gebührenanzeige eines Telekommunikationsendgerätes (TEA) des Teilnehmers (TEI) angezeigt werden.

3.  Verfahren nach Anspruch 1 oder 2,
    **dadurch gekennzeichnet, dass** in einer Datenbank (DAT) ein zumindest einem Teilnehmer (TEI) und/oder zumindest einem Dienst zugeordneter, vorgebbarer Wert für die Taktung (TAK) abgelegt wird.

4.  Verfahren nach Anspruch 1 oder 2,
    **dadurch gekennzeichnet, dass** die Taktung (TAK) in Abhängigkeit von der Art des benutzten Dienstes (DIE, SPR, FAX) erfolgt.

5.  Verfahren nach einem der Ansprüche 1 bis 4,
    **dadurch gekennzeichnet, dass** das Telekommunikationsystem (SYS) zumindest zwei Netze (TNA, TNB) aufweist, und bei Benutzung eines netzüberschreitenden Dienstes (DIE, SPR, FAX) durch den Teilnehmer (TEI) die Festlegung der Taktung (TAK) von Seiten eines Netzübergangsstellenbetreibers erfolgt, wobei Informationen über die Taktung (TAK) von dem Netzübergangsstellenbetreiber an die Gebührenberechnungsstelle (GBS) übermittelt werden.

6.  Verfahren nach einem der Ansprüche 1 bis 4,
    **dadurch gekennzeichnet, dass** in Abhängigkeit von dem Teilnehmer und/oder dem Dienst (DIE, SPR, FAX) von einer Dienststeuerzentrale (SCP) die Taktung (TAK) gesteuert wird und Informationen über die Taktung (TAK) an die Gebührenberechnungsstelle (GBS) übermittelt werden.

7.  Telekommunikationssystem (SYS) mit einer Gebührenberechnungsstelle (GBS), welche dazu eingerichtet ist, bei Inanspruchnahme eines Dienstes (DIE, SPR, FAX) anfallende Gebühren (GEB) anhand einer dem Dienst (DIE, SPR, FAX) zugeordneten Tarifrate (TAR) und der Benutzungsdauer des Dienstes (DIE, SPR, FAX) zu berechnen, wobei die Abrechnungsgenauigkeit der Gebühren (GEB) von einer von Seiten eines tarifierenden Netz/Dienstbetreibers vorgebbaren Taktung (TAK) des der Gebührenbrechnung zugrunde liegenden Zeitintervalls bestimmt ist und die Gebührenberechnungsstelle (GBS) weiters dazu eingerichtet ist, in vorgebbaren Zeitintervallen Informationen über die angefallenen Gebühren (GEB) an ein Telekommunikationsengerät (TEA) eines Teilnehmers (TEI, A, B) zu übermitteln **dadurch gekennzeichnet, dass** es dazu eingerichtet ist, Informationen über die Taktung (TAK) an die Gebührenberechnungsstelle (GBS) zu übermitteln und zur Berechnung der anfallenden Gebühren (GEB) das Produkt der Tarifrate (TAR) und der Taktung (TAK) zu bilden und dieses Produkt in Abhängigkeit von der Benutzungsdauer über eine vorgebbare Anzahl (n) von Taktungen (TAK) zu summieren.

8.  Telekommunikationsystem nach Anspruch 7,
    **dadurch gekennzeichnet, dass** es dazu eingerichtet ist, die Informationen über die anfallenden Gebühren auf einer Gebührenanzeige eines Telekommunikationsendgerätes (TEA) des Teilnehmers (TEI, A, B) anzuzeigen.

9.  Telekommunikationssystem nach Anspruch 7 oder 8,
    **dadurch gekennzeichnet, dass** zumindest eine Datenbank (DAT) vorgesehen ist, in der ein zumindest einem Teilnehmer (TEI, A, B) und/oder zumindest einem Dienst (DIE) zugeordneter, vorgebbarer Wert für die Taktung (TAK) abgelegt ist.

**10.** Telekommunikationssystem nach einem der Ansprüche 7 bis 9,
**dadurch gekennzeichnet, dass** die Taktung (TAK) von der Art des benutzten Dienstes (DIE) abhängt.

**11.** Telekommunikationsystem nach einem der Ansprüche 7 bis 10,
**dadurch gekennzeichnet, dass** zumindest zwei Teilnehmernetze (TNA, TNB) vorgesehen sind, die mittels einer Netzübergangsstelle (VBN) miteinander verbunden sind, wobei das Telekommunikationssystem derart ausgebildet ist, dass bei Benutzung eines netzüberschreitenden Telekommunikationsdienstes (DIE) durch den Teilnehmer (TEI, A, B) die Festlegung der Taktung (TAK) von Seiten der Netzübergangsstelle (VBN) erfolgt, und Informationen über die Taktung (TAK) von der Netzübergangsstelle (VBN) an die Gebührenberechnungsstelle (GBS) übermittelt werden.

**12.** Telekommunikationssystem nach einem der Ansprüche 7 bis 10,
**dadurch gekennzeichnet**, eine Dienststeuerzentrale (SCP) vorgesehen ist, die dazu eingerichtet ist, in Abhängigkeit von dem Teilnehmer (TEI) und/oder dem Telekommunikationsdienst (DIE, A, B) die Taktung (TAK) zu steuern und Informationen über die Taktung (TAK) an die Gebührenberechnungsstelle (GBS) zu übermitteln.

**Claims**

**1.** Method for the running calculation of charges in a telecommunication system (SYS) having a charge calculation point (GBS) which is equipped to receive information about a current tariff rate (TAR) and to calculate, on the basis of the tariff rate (TAR) and the duration of use of a service (DIE, SPR, FAX), charges (GEB) being incurred, with the accounting precision of the charges (GEB) being determined by a clocking (TAK) of the time interval on which the charge calculation is based, which clocking can be predefined by a service provider setting the tariff, and the charge calculation point (GBS) also being equipped to transmit information about the charges (GEB) incurred to a subscriber at predefinable time intervals, **characterised in that** information relating to the clocking (TAK) of the network operator/service provider setting the tariff is transmitted to the charge calculation point (GBS) and in order to calculate the charges (GEB) incurred the product of the tariff rate (TAR) per time unit and the clocking (TAK) is formed and said product is aggregated as a function of the duration of use over a predefinable number of clockings (TAK).

**2.** Method according to claim 1,
**characterised in that** the information about the charges being incurred is displayed on a charge display of a telecommunication terminal (TEA) of the subscriber (TEI).

**3.** Method according to claim 1 or 2,
**characterised in that** a predefinable value for the clocking (TAK) assigned to at least one subscriber (TEI) and/or at least one service is stored in a database (DAT).

**4.** Method according to claim 1 or 2,
**characterised in that** the clocking (TAK) is implemented according to the type of service used (DIE, SPR, FAX).

**5.** Method according to one of the claims 1 to 4,
**characterised in that** the telecommunication system (SYS) comprises at least two networks (TNA, TNB) and when a cross-network service (DIE, SPR, FAX) is used by the subscriber (TEI) the clocking (TAK) is specified by a network gateway operator, with information about said clocking (TAK) being transmitted by the gateway operator to the charge calculation point (GBS).

**6.** Method according to one of the claims 1 to 4,
**characterised in that** the clocking (TAK) is controlled by a service control centre according to the subscriber and/or the service (DIE, SPR, FAX) and information relating to the clocking (TAK) is transmitted to the charge calculation point (GBS).

**7.** Telecommunication system (SYS) having a charge calculation point (GBS) which is equipped to calculate the charges (GEB) being incurred for the use of a service (DIE, SPR, FAX) on the basis of a tariff rate (TAR) assigned to the service (DIE, SPR, FAX) and the duration of use of the service (DIE, SPR, FAX), with the accounting precision of the charges (GEB) being determined by a clocking (TAK) of the time interval on which the charge calculation is based, which clocking can be predefined by a network operator/service provider setting the tariff, and the charge calculation point (GBS) also being equipped to transmit information about the charges (GEB) incurred to a telecommunication terminal (TEA) of a subscriber (TEI, A, B) at predefinable time intervals
**characterised in that** it is equipped to transmit information relating to the clocking (TAK) to the calculation point (GBS) and, in order to calculate the charges (GEB) incurred, to form the product of the tariff rate (TAR) and the clocking (TAK) and to aggregate said product as a function of the duration of use over a predefinable number (n) of clockings (TAK).

8. Telecommunication system according to claim 7, **characterised in that** it is equipped to display the information relating to the charges incurred on a charge display of a telecommunication terminal (TEA) of the subscriber (TEI, A, B).

9. Telecommunication system according to claim 7 or 8, **characterised in that** at least one database (DAT) is provided in which there is stored a predefinable value for the clocking (TAK) assigned to at least one subscriber (TEI, A, B) and/or at least one service (DIE).

10. Telecommunication system according to one of the claims 7 to 9, **characterised in that** the clocking (TAK) is dependent on the type of service (DIE) used.

11. Telecommunication system according to one of the claims 7 to 9, **characterised in that** at least two subscriber networks (TNA, TNB) are provided which are connected to each other by means of a network gateway (VBN), with the telecommunication system being embodied such that when a cross-network telecommunication service (DIE) is used by the subscriber (TEI, A, B) the clocking (TAK) is specified by the network gateway (VBN) and information relating to the clocking (TAK) is transmitted by the gateway (VBN) to the charge calculation point (GBS).

12. Telecommunication system according to one of the claims 7 to 10, **characterised in that** a service control centre (SCP) is provided which is equipped to control the clocking (TAK) according to the subscriber (TEI) and/or the telecommunication service (DIE, A, B) and to transmit information relating to the clocking (TAK) to the charge calculation point (GBS).

**Revendications**

1. Procédé de calcul de redevances en cours dans un système de télécommunications (SYS) au moyen d'une station de calcul de redevances (GBS) qui est destinée à recevoir des informations sur un tarif actuel (TAR) et à calculer des redevances générées (GEB) en se fondant sur le tarif actuel (TAR) et la durée d'utilisation d'un service (DIE, SPR, FAX), la précision de calcul des redevances (GEB) étant déterminée par un cadencement (TAK) de la durée servant de base de calcul de redevances, lequel cadencement pouvant être prédéterminé du côté d'un exploitant de services et la station de calcul de redevances (GBS) étant en outre destiné à transmettre à des intervalles de temps prédéterminés des informations sur les redevances générées (GEB) à un abonné, **caractérisé en ce que** des informations sur le cadencement (TAK) déterminé par l'exploitant de services/réseaux qui impose le tarif sont transmises à la station de calcul de redevances (GBS) et le produit du tarif (TAR) par unité de temps et du cadencement (TAK) est formé pour calculer les redevances (GEB) générées et ce produit est sommé en fonction de la durée d'utilisation sur un nombre prédéterminé de cadencements (TAK).

2. Procédé selon la revendication 1, **caractérisé en ce que** les informations sur les redevances générées sont indiquées sur un dispositif d'indication de redevances d'un terminal de télécommunications (TEA) de l'abonné (TEI).

3. Procédé selon la revendication 1 ou 2, **caractérisé en ce qu'**une valeur prédéterminée du cadencement (TAK), qui est associée à au moins un abonné (TEI) et/ou au moins un service, est mémorisée dans une banque de données (DAT).

4. Procédé selon la revendication 1 ou 2, **caractérisé en ce que** le cadencement (TAK) est effectué en fonction du typé du service utilisé (DIE, SPR, FAX).

5. Procédé selon l'une des revendications 1 à 4, **caractérisé en ce que** le système de télécommunications (Sys) comporte au moins deux réseaux (TNA, TNB) et **en ce que**, lors de l'utilisation d'un service (DIE, SPR, FAX) en dehors d'un réseau par l'abonné, l'exploitant de l'interface entre réseaux définit le cadencement (TAK) en transmettant des informations sur le cadencement (TAK) à la station de calcul de redevances (GBS).

6. Procédé selon l'une des revendications 1 à 4, **caractérisé en ce que** le cadencement (TAK) est commandé par un central de commande de service (SCP) en fonction de l'abonné et/ou du service (DIE, SPR, FAX) et des informations sur le cadencement (TAK) sont transmises à la station de calcul de redevances (GBS).

7. Système de télécommunications (SYS) comportant une station de calcul de redevances (GBS), qui est destinée à calculer, lors de la demande d'un service (DIE, SPR, FAX), des redevances générées (GEB) en se fondant sur un tarif (TAR) associé au service (DIE, SPR, FAX) et sur la durée d'utilisation du service (DIE, SPR, FAX), la précision de calcul des redevances (GEB) étant déterminée par un cadencement (TAK) de la durée servant de base de calcul de redevances, lequel cadencement pouvant être prédéterminé du côté d'un exploitant de services/ réseaux qui impose le tarif, et la station de calcul de redevances (GBS) étant en outre destinée à transmettre à des intervalles de temps prédéterminés des informations sur les redevances générées (GEB) à un terminal de télécommunications (TEA) d'un abonné (TEI, A, B), **caractérisé en ce qu'**il est destiné à transmettre des informations sur le cadencement (TAK) à la station de calcul de redevances (GBS), à former le produit du tarif (TAR) et du cadencement (TAK) pour calculer les redevances générées et à sommer ce produit en fonction de la durée d'utilisation sur un nombre prédéterminé (n) de cadencement (TAK).

8. Système de télécommunications selon la revendication 7, **caractérisé en ce qu'**il est destiné à indiquer les informations sur les redevances générées au moyen d'un dispositif d'indication de redevances d'un terminal de télécommunications (TEA) de l'abonné (TEI, A, B).

9. Système de télécommunications selon la revendication 7 ou 8, **caractérisé en ce qu'**il est prévu au moins une banque de données (DAT) dans laquelle une valeur prédéterminée du cadencement (TAK), qui est associée à au moins un abonné TEI, A, B) et/ou au moins un service (DIE), est mémorisée.

10. Système de télécommunications selon l'une des revendications 7 à 9, **caractérisé en ce que** le cadencement (TAK) est fonction du type du service utilisé (DIE).

11. Système de télécommunications selon l'une des revendications 7 à 10, **caractérisé en ce qu'**il est prévu au moins deux réseaux d'abonnés (TNA, TNB) qui sont reliés entre eux par une interface de réseaux (VBN), le système de télécommunication étant conformé de telle sorte que, lorsque l'abonné (TEI, A, B) utilise un service de télécommunications (DIE) en dehors d'un réseau, l'interface de réseaux (VBN) définit le cadencement (TAK), des informations sur le cadencement (TAK) étant transmises à la station de calcul de redevances (GBS).

12. Système de télécommunications selon l'une des revendications 7 à 10, **caractérisé en ce qu'**il est prévu un central de commande de service (SCP) qui destiné à commander le cadencement (TAK) en fonction de l'abonné (TEI) et/ou du service de télécommunications (DIE, A, B) et à transmettre des informations sur le cadencement (TAK) à la station de calcul de redevances (GBS).

Fig. 1

Fig. 2

Fig. 3

DAT1

| TEI | TAR [Preis/sekunde] | TAK | DIE | STA |
|-----|---------------------|-----|-----|-----|
| A   | 10                  | 1   | SPR | J   |
| B   | 5                   | 10  | FAX | N   |
| ⋮   | ⋮                   | ⋮   | ⋮   | ⋮   |

Fig. 4

DAT2

| TEI | TAK | DIE |
|-----|-----|-----|
| A   | 1   | SPR |
| B   | 10  | FAX |
| ⋮   | ⋮   | ⋮   |

Fig. 5